(19) Europäisches Patentamt / European Patent Office / Office européen des brevets

(11) **EP 4 073 009 B1**

(12) **EUROPEAN PATENT SPECIFICATION**

(45) Date of publication and mention
of the grant of the patent:
**10.04.2024 Bulletin 2024/15**

(21) Application number: **20820180.6**

(22) Date of filing: **10.12.2020**

(51) International Patent Classification (IPC):
***C03C 17/32*** *(2006.01)*

(52) Cooperative Patent Classification (CPC):
**C03C 17/322**

(86) International application number:
**PCT/EP2020/085449**

(87) International publication number:
**WO 2021/116256 (17.06.2021 Gazette 2021/24)**

(54) **GLASS CONTAINER WITH A PROTECTIVE COATING OF ACRYLATE URETHANE POLYMER DEPOSITED ON AN EXTERIOR SURFACE OF THE GLASS CONTAINER; METHOD OF PRODUCING SUCH GLASS CONTAINER AND USE OF SUCH GLASS CONTAINER**

GLASBEHÄLTER MIT EINER AUF EINER AUSSENFLÄCHE DES GLASBEHÄLTERS AUFGEBRACHTEN SCHUTZSCHICHT AUS ACRYLAT-URETHANPOLYMER, VERFAHREN ZUR HERSTELLUNG EINES SOLCHEN GLASBEHÄLTERS UND VERWENDUNG EINES SOLCHEN GLASBEHÄLTERS

RÉCIPIENT EN VERRE PORTANT UN REVÊTEMENT PROTECTEUR DE POLYMÈRE D'ACRYLATE-URÉTHANE DÉPOSÉ SUR UNE SURFACE EXTÉRIEURE DU RÉCIPIENT EN VERRE, PROCÉDÉ DE PRODUCTION D'UN TEL RÉCIPIENT EN VERRE ET UTILISATION D'UN TEL RÉCIPIENT EN VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2019 BE 201905903**

(43) Date of publication of application:
**19.10.2022 Bulletin 2022/42**

(73) Proprietor: **Anheuser-Busch InBev S.A.**
**1000 Brussels (BE)**

(72) Inventors:
• **VANDECRUYS, Jonas**
**3000 Leuven (BE)**
• **DE GRAAF, Frederik**
**3000 Leuven (BE)**
• **ESTEBAN TEDEJA, Leticia**
**3000 Leuven (BE)**

(74) Representative: **Marks & Clerk LLP**
**15 Fetter Lane**
**London EC4A 1BW (GB)**

(56) References cited:
**JP-A- 2013 049 618**

• **BETTEMBOURG J-M: "PROTECTION DES VERRES DE VITRAUX CONTRE LES AGENTS ATMOSPHERIQUES. ETUDE DE FILMS DE RESINES SYNTHETIQUES", VERRES ET REFRACTAIRES, INSTITUT DU VERRE. PARIS, FR, vol. 30, no. 1, 1 January 1976 (1976-01-01), pages 87-90, XP001216180,**
• **MASSÉ G: "La décoration du verre", VERRE, INSTITUT DU VERRE, PARIS, FR, vol. 14, no. 5, 1 November 2008 (2008-11-01), pages 20-25, XP001520359, ISSN: 0984-7979**
• **CHEMICAL ABSTRACTS, CHEMICAL ABSTRACTS SERVICE (C A S), US, 22 April 1991 (1991-04-22), XP000194531, ISSN: 0009-2258**

**Description**

**FIELD OF INVENTION**

The present invention generally relates to polymer coated glass containers. More particularly, the present invention relates to glass containers coated with an acrylate urethane polymer coating, especially beverage bottles, especially non-returnable beverage bottles.

**BACKGROUND OF INVENTION**

Glass containers are widely used and reused in packaging industry, for packing different types of contents, such as liquid, or solids, for example beverages, food, pharmaceutical liquid and solid matter, water or any other matter. Packaged products are also transported to distances for delivery to the end consumers. While producing, filling and transporting, glass containers can get scuffed and scratched due to friction produced between two glass containers while colliding with each other. Additionally, the impact due to collision may also result in breakage of the glass containers. Further, strength of the returnable glass containers may also be affected due to the thermal shock and impact, and collision with each other.

Packaging of content into glass containers depends majorly on the mechanical strength of glass, which is also affected by the processing techniques adopted, including speeds used in the manufacturing and filling of the glass containers; handling equipment used; and/or collision from other packages. The mechanical damage caused to the glass container may be the abrasion of glass, scuffing, and scratching of glass surface. For returnable bottles, also, repeatedly chemically treating of the bottles for cleaning and refilling may affect glass quality that may eventually result in decreasing their life cycle. Such as, treating the returnable glass containers with the caustic bath damages the glass surface. Chemical and thermal treatments are also implemented to strengthen the mechanical durability of glass surface.

Strengthening of the glass surface and glass bottle in general becomes even more critical when light weighing glass bottles. The increasing attention for an environmental friendly industry, pushes the limits on use of materials, on the carbon footprint transport and on sustainability. When reducing glass thickness to address the environmentally friendly market requests, sustainability of the glass bottle is pushed to the limits and strengthening of the glass becomes a prerequisite to prevent glass failure and hence jeopardizes sustainability of glass bottles.

Hence, a market need remains for providing lightweight glass bottles, in particular beverage bottles having a coating over its outer glass surfaces which positively influence the glass strength, and protect the surface from scuffing and scratching, abrasion and failure.

JP 2013 049618 A describes a coating method of a returnable glass bottle which prevents strength reduction due to a scratch on the glass surface and enables to reduce the glass wall thickness by the protective action of a coating film, whereby the glass bottle can be made light in weight. Bettembourg J-M: "Protection des verres de vitraux contre les agents atmospheriques. Etude de films de resins synthetiques" describes the protection of stained glass against atmospheric agents, and provides a study of synthetic resin films.

**SUMMARY OF INVENTION**

The present invention addresses the above market need based on the surprising finding that digitally printed acrylate urethane polymer coatings allow light-weighting containers without negatively influencing sustainability of the container.

According to a first aspect, there is provided a glass container according to the appended claims. According to a second aspect, there is provided a method according to the appended claims.

It is a further objective of the present invention to use a glass container as identified above or as produced by the above method as a container, preferably bottle, for holding a beverage, preferably a carbonated beverage such as beer or cider.

**DETAILED SUMMARY OF THE INVENTION**

According to a preferred embodiment of the present invention, wherein the coating has a ratio T, with T equal to *sample standard deviation of the thickness of the coating ÷ thickness of the coating,* which is measured along a theoretical line extending in a plane normal to the longitudinal axis of the container, at the circumference of the container exterior surface, and with T having a value of maximally 0,062, preferably maximally 0,050, most preferably maximally 0,044.

According to a first embodiment of the present invention, the glass container is a non-returnable (1-way) bottle, preferably having an impact resistance of at least 70 cm/s, preferably at least 120 cm/s, most preferably at least 210 cm/s and/or an internal pressure resistance of at least 12 bar, preferably at least 20 bar.

According to a second embodiment of the present invention, the glass container is a returnable bottle, preferably having an impact resistance of at least 75 cm/s, preferably at least 120 cm/s, most preferably at least 210 cm/s and/or an internal pressure resistance of at least 12 bar, preferably at least 20 bar.

The glass container according to the present invention preferably has an acrylate urethane polymer coating with a average mean thickness of between 20 and 40 μm, which acrylate urethane polymer coating preferably defines an exposed outer contact area of the container, lacking a further coating on top of said acrylate urethane polymer coating. The acrylate urethane polymer coating may be applied on top of a cold-end coating.

The glass container is preferably a beverage bottle, more preferably a carbonated beverage bottle, most preferably a beer bottle or a cider bottle.

## BRIEF DESCRIPTION OF DRAWINGS

FIG. 1 illustrates a flow chart showing a method of coating a glass surface of a glass container, in accordance with an embodiment of the present invention.
FIG. 2 shows a glass bottle according to the present invention.

## DETAILED DESCRIPTION

The present invention provides a unique protective coating over a glass surface of a lightweight glass body for increasing the strength of the glass in terms of impact resistance. The coating also protects the glass surface against scuffing and scratching. In a preferred embodiment, the glass body is a glass container, in particular a glass bottle. According to the present invention, a preferable portion or the whole glass surface is coated with an acrylate urethane polymer coating.

An acrylate urethane polymer coating has a very low coefficient of friction, is self-lubricant and very resistant to abrasion. Therefore, the polymer coating of acrylate urethane polymer over the glass surface also protects the glass surface from abrasion, scuffing and scratching, which is usually caused due to friction produced by collision between two glass surfaces. Further, since the acrylate urethane polymer coating is self-lubricant, the glass surface is provided with slippery surface, which prevents two glasses from sticking to each other and hence avoid friction.

The glass container, preferably a beverage bottle, defines an inner space delimited by a body portion extending along a longitudinal axis of the bottle and extending at one side, into a bottom portion at a heel of the bottle that extends into a bottom portion, the body portion extending at its other side, at a shoulder of the bottle, into a neck portion extending into a mouth of the bottle through which the inner space can be accessed for filling and emptying the bottle. In common glass bottle designs, the glass bottle has its largest diameter (measure perpendicular to the longitudinal axis) at the heel and/or at the shoulder portion.

In accordance with the invention the glass bottle has a lightweight index L (as defined by the Japan Glass Bottle Association), calculated as

$$L=[\text{weight of bottle (g)}/(\text{volume of bottle (ml)})^{0,77}]*0,44$$

of less than 1, preferably less than 0,90, more preferably less than 0,75 and most preferably less than 0,60.

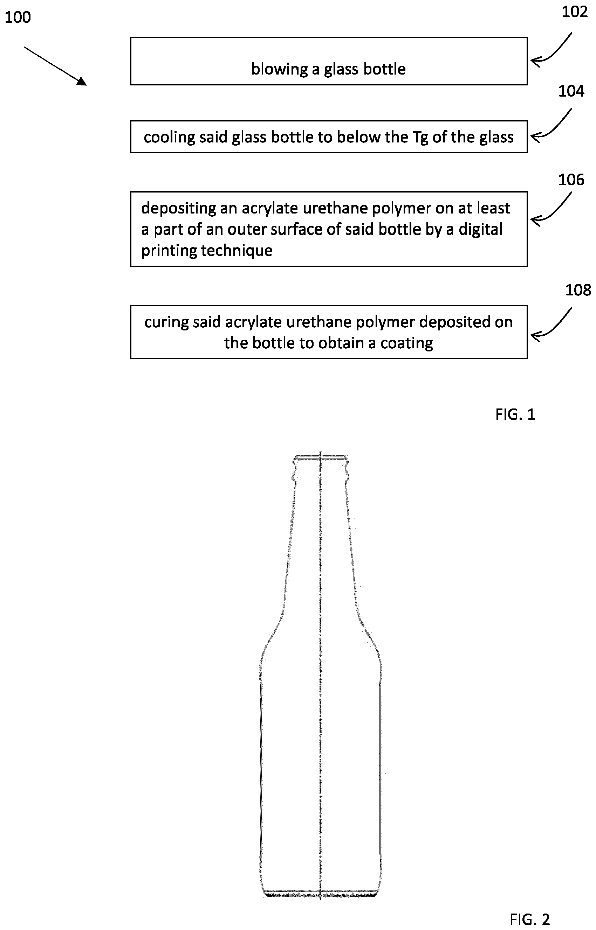

FIG. 1 provides a flow chart showing a method of producing a glass container in accordance with the present invention. As shown, the method 100 comprises a step 102 of blowing a glass container defining an exterior surface and an interior surface opposite to the exterior surface; a step 104 of cooling said glass container to below the Tg of the glass; a step 106 of depositing an acrylate urethane polymer on at least a part of an outer surface of said container by a digital printing technique; and a step 108 of curing said acrylate urethane polymer deposited on the container to obtain a coating, said coating having a uniform thickness that is characterized by a ratio T, with T equal to
*sample standard deviation of the thickness of the coating ÷ thickness of the coating,* measured along a theoretical line extending in a plane normal to the longitudinal axis of the container at the circumference of the container exterior surface, and with T having a value of maximally 0,062, preferably maximally 0,050, most preferably maximally 0,044.

The container, preferably a glass bottle, thus produced can be either a non-returnable (1-way) bottle or a returnable bottle upon which the coating is applied with preferably an average mean thickness of between 20 and 40 μm.

In case of a 1-way bottle that is usually light-weight and designed to maintain functional during filling, transport and consuming cycle, the coating allows for increasing the impact resistance of the bottle to at least 70 cm/s, preferably at least 120 cm/s and most preferably at least 210 cm/s and/or for increasing the internal pressure resistance of the bottle to at least 12 bar, preferably at least 20 bar. This is particularly suitable for bottles used to hold carbonated beverages such as beer.

In case of returnable bottles, which are designed to maintain functional during a series of six or more cycles of filling, transport, consuming and cleaning, the coating allows for increasing the impact resistance of the bottle to at least 70 cm/s, preferably at least 120 cm/s and most preferably at least 210 cm/s and/or for increasing the internal pressure resistance of the bottle to at least 12 bar, preferably at least 20 bar. Again, this is particularly suitable for bottles used to hold carbonated beverages such as beer.

Irrespective of the type of container or in particular bottle, the volume to be contained therein preferably ranges between 10 cl and 1,21.

**Acrylate urethane coatings**

Generally, urethane acrylates are prepared from isocyanates, polyols, acrylates. Examples of the isocyanate include hexamethylene diisocyanate, trimethylhexamethylene diisocyanate, toluene diisocyanate, isophorone diisocyanate, phenyl isocyanate, naphthyl isocyanate and the like. Examples of the polyol include polyether polyol, polyester polyol, acryl polyol, polysiloxane polyol and the like. Examples of the polyester polyol include polyethylene glycol, polypropylene glycol, polyol composed of a copolymer of ethylene oxide and propylene oxide, polytetramethylene glycol and the like. Examples of the polyester polyol include caprolactone polyol, polycarbonate polyol and the like.

Acrylate is preferably one having a hydroxyl group and one or more acrylic groups and examples of the hydroxyacrylate having a single acrylic group include hydroxyethyl acrylate, hydroxyacyl (meth) acrylate, hydroxypropyl acrylate, Hydroxybutyl acrylate and the like. Examples of the hydroxyacrylate having a plurality of (preferably 2 or more and 4 or less) acrylic groups include pentaerythritol triacrylate and the like.

In order to obtain urethane acrylate having a plurality of acrylic groups on at least one side of the main chain terminal, it is preferable to use hydroxy acrylate having a plurality of acryl groups.

Digitally printing of the urethane coating allows an improved control on the thickness and uniformity of the coating when compared to other application techniques such as screen printing or spraying. Such improved control results in coating that are less prone to surface effects and are believed to be more environmentally friendly in terms of use of material and in energy consumption for application and curing.

**Impact resistance test method**

Typically, impacts are carried out at the contact point for that particular item, such as shoulder and heel for bottles or the rim of a pint glass and the testing is carried out until failure of the sample occurs. However, client requests such as testing until first damage is visible or at specific impact positions can also be undertaken. For the present invention, values provided in this specification are measured at the shoulder of the bottle and in accordance with an industry standard, calibrated, AGR impacter and UKAS accredited under ISO 17025.

Example

A glass bottle as shown in Figure 2, was coated with a method in accordance with the present invention and subsequently the thickness of the coating was measured at 12 equidistant points along a theoretical line along the circumference of the bottle exterior surface extending in a plane normal to the longitudinal axis of the bottle. This measurement was repeated to collect data from three theoretical lines at the shoulder of the bottle and from three theoretical lines at the heel of the bottle. The results are shown in table 1 below.

| Position | | Shoulder (µm) | | | | | | | | | | | | AVG | SD | SD/AVG |
|---|---|---|---|---|---|---|---|---|---|---|---|---|---|---|---|---|
| | | 0* | 30* | 60* | 90* | 120* | 150* | 180* | 210* | 240* | 270* | 300* | 330* | | | |
| Measurement location in picture | 1 | 27 | 26 | 27 | 28 | 28 | 30 | 28 | 26 | 28 | 27 | 27 | 27 | 27,417 | 1,084 | 0,040 |
| | 2 | 28 | 27 | 29 | 30 | 29 | 25 | 30 | 28 | 26 | 28 | 28 | 25 | 27,750 | 1,712 | 0,062 |
| | 3 | 26 | 29 | 28 | 29 | 29 | 28 | 30 | 28 | 28 | 28 | 30 | 27 | 28,333 | 1,155 | 0,041 |

| Position | | Heel (µm) | | | | | | | | | | | | AVG | SD | SD/AVG |
|---|---|---|---|---|---|---|---|---|---|---|---|---|---|---|---|---|
| | | 0* | 30* | 60* | 90* | 120* | 150* | 180* | 210* | 240* | 270* | 300* | 330* | | | |
| Measurement location in picture | 1 | 25 | 28 | 24 | 26 | 27 | 27 | 25 | 26 | 25 | 26 | 26 | 27 | 26,000 | 1,128 | 0,043 |
| | 2 | 25 | 26 | 26 | 25 | 26 | 26 | 25 | 24 | 26 | 26 | 27 | 25 | 25,583 | 0,793 | 0,031 |
| | 3 | 25 | 27 | 25 | 28 | 28 | 27 | 26 | 27 | 27 | 27 | 25 | 25 | 26,417 | 1,165 | 0,044 |

**Table 1**

**Claims**

1. A glass container comprising:

    an exterior surface and an interior surface opposite to the exterior surface; and
    a coating of acrylate urethane polymer deposited at least over a portion of the exterior surface,
    wherein said glass container has a lightweight index L, calculated as L=[weight of container (g)/(volume of container (ml))$^{0,77}$]*0,44 , of less than 1, preferably less than 0,90 , more preferably less than 0,75 and most preferably less than 0,60.

2. The glass container according to claim 1, wherein said coating is **characterized by** a ratio T, with T equal to *sample standard deviation of the thickness of the coating ÷ thickness of the coating,* measured along a theoretical line extending in a plane normal to a longitudinal axis of the glass container at a circumference of the exterior surface, and having a value of maximally 0,062 , preferably maximally 0,050 , most preferably maximally 0,044.

3. The glass container according to claim 1 or 2, said container having an internal pressure resistance of at least 12 bar, preferably at least 20 bar.

4. The glass container according to any of the preceding claims, having an impact resistance of 70 cm/s, preferably 120 cm/s, most preferably 210 cm/s.

5. The glass container according to any of the preceding claims, having an internal volume of between 10 cl and 1,2 l.

6. The glass container according to any of the preceding claims, said acrylate urethane polymer coating having an average mean thickness of between 20 and 40 µm.

7. The glass container according to any of the preceding claims, said acrylate urethane polymer coating defining an exposed outer contact area of the container, lacking a further coating on top of said acrylate urethane polymer coating.

8. The glass container according to any of the preceding claims, said acrylate urethane polymer coating applied on top of a hot-end coating.

9. The glass container according to any of the preceding claims, said container being a beverage bottle, preferably a carbonated beverage bottle.

10. The glass container according to claim 9, said bottle being a beer or cider bottle.

11. The glass container according to any of the preceding claims, said glass container being a returnable or a non-returnable glass bottle.

12. A method of coating a glass container having a longitudinal axis, said method comprising the steps of:

- providing a glass container, said glass container optionally coated with a hot-end coating;
- depositing an acrylate urethane polymer on at least a part of an outer surface of said container by a digital printing technique (106);
- curing said acrylate urethane polymer deposited on the container to obtain a coating (108),

wherein said glass container has a lightweight index L, calculated as L=[weight of container (g)/(volume of container (ml))$^{0,77}$]*0,44 , of less than 1, preferably less than 0,90 , more preferably less than 0,75 and most preferably less than 0,60.

13. The method according to claim 12, wherein said coating is **characterized by** a ratio T, with T equal to

$$sample\ standard\ deviation\ of\ the\ thickness\ of\ the\ coating \div thickness\ of\ the\ coating$$

- measured along a theoretical line extending in a plane normal to the longitudinal axis of the container, at the circumference of the container exterior surface -, has a value of maximally 0,062, preferably maximally 0,050 , most preferably maximally 0,044.

14. Use of a glass container as identified in any of claims 1-10 for holding a beverage, preferably a carbonated beverage.

15. Use of the glass container as identified in claim 14, wherein the beverage is a beer or a cider.


**Patentansprüche**

1. Glasbehälter, Folgendes umfassend:

eine Außenfläche und eine der Außenfläche gegenüberliegende Innenfläche; und
eine Beschichtung aus Acrylat-Urethan-Polymer, die mindestens auf einem Abschnitt der Außenfläche abgelagert ist,
wobei der Glasbehälter einen Leichtgewichtsindex L, berechnet als
$L$ = [Gewicht des Behälters (g)/(Volumen des Behälters (ml))$^{0,77}$]*0,44, von weniger als 1, vorzugsweise weniger als 0,90, noch bevorzugter weniger als 0,75 und besonders bevorzugt weniger als 0,60 aufweist.

2. Glasbehälter nach Anspruch 1, wobei die Beschichtung durch ein Verhältnis T gekennzeichnet ist, wobei T gleich Folgendem ist:

$$Probenstandardabweichung\ der\ Dicke\ der\ Beschichtung \div Dicke\ der\ Beschichtung,$$

gemessen entlang einer theoretischen Linie, die sich in einer Ebene senkrecht zu einer Längsachse des Glasbehälters an einem Umfang der Außenfläche erstreckt, und einen Wert von maximal 0,062, vorzugsweise maximal 0,050, besonders bevorzugt maximal 0,044 aufweist.

3. Glasbehälter nach Anspruch 1 oder 2, wobei der Behälter eine Innendruckfestigkeit von mindestens 12 Bar, vorzugsweise von mindestens 20 Bar aufweist.

4. Glasbehälter nach einem der vorhergehenden Ansprüche, der eine Schlagfestigkeit von 70 cm/s, vorzugsweise 120 cm/s, besonders bevorzugt 210 cm/s aufweist.

5. Glasbehälter nach einem der vorhergehenden Ansprüche, der ein Innenvolumen zwischen 10 cl und 1,2 1 aufweist.

6. Glasbehälter nach einem der vorhergehenden Ansprüche, wobei die Acrylat-Urethan-Polymer-Beschichtung eine mittlere Dicke zwischen 20 und 40 μm aufweist.

7. Glasbehälter nach einem der vorhergehenden Ansprüche, wobei die Acrylat-Urethan-Polymer-Beschichtung eine freiliegende äußere Kontaktfläche des Behälters definiert, ohne eine weitere Beschichtung auf der Acrylat-Urethan-Polymer-Beschichtung.

8. Glasbehälter nach einem der vorhergehenden Ansprüche, wobei die Acrylat-Urethan-Polymer-Beschichtung auf eine Heißendbeschichtung aufgebracht wird.

9. Glasbehälter nach einem der vorhergehenden Ansprüche, wobei der Behälter eine Getränkeflasche, vorzugsweise eine Flasche für kohlensäurehaltige Getränke, ist.

10. Glasbehälter nach Anspruch 9, wobei die Flasche eine Bier- oder Cidreflasche ist.

11. Glasbehälter nach einem der vorhergehenden Ansprüche, wobei der Glasbehälter eine Mehrweg- oder Einweg-Glasflasche ist.

12. Verfahren zum Beschichten eines Glasbehälters, der eine Längsachse aufweist, wobei das Verfahren die folgenden Schritte umfasst:

- Bereitstellen eines Glasbehälters, wobei der Glasbehälter optional mit einer Heißendbeschichtung beschichtet ist;
- Ablagern eines Acrylat-Urethan-Polymers auf mindestens einem Teil einer äußeren Oberfläche des Behälters durch eine Digitaldrucktechnik (106);
- Aushärten des auf dem Behälter abgelagerten Acrylat-Urethan-Polymers, um eine Beschichtung (108) zu erzielen,
wobei der Glasbehälter einen Leichtgewichtsindex L, berechnet als
$L$ = [Gewicht des Behälters (g)/(Volumen des Behälters (ml))$^{0,77}$]*0,44, von weniger als 1, vorzugsweise weniger als 0,90, noch bevorzugter weniger als 0,75 und besonders bevorzugt weniger als 0,60 aufweist.

13. Verfahren nach Anspruch 12, wobei die Beschichtung durch ein Verhältnis T gekennzeichnet ist, wobei T gleich Folgendem ist:

$$\textit{Probenstandardabweichung der Dicke der Beschichtung} \div \textit{Dicke der Beschichtung,}$$

- gemessen entlang einer theoretischen Linie, die sich in einer Ebene senkrecht zur Längsachse des Behälters, am Umfang der Außenfläche des Behälters erstreckt, - und einen Wert von maximal 0,062, vorzugsweise maximal 0,050, besonders bevorzugt maximal 0,044 aufweist.

14. Verwendung eines Glasbehälters nach einem der Ansprüche 1 bis 10 zur Aufnahme eines Getränks, vorzugsweise eines kohlensäurehaltigen Getränks.

15. Verwendung des Glasbehälters nach Anspruch 14, wobei das Getränk ein Bier oder ein Cidre ist.

**Revendications**

1. Récipient en verre comprenant :

une surface extérieure et une surface intérieure opposée à la surface extérieure ; et
un revêtement de polymère d'acrylate-uréthane déposé au moins sur une partie de la surface extérieure,
dans lequel ledit récipient en verre présente un indice de légèreté L, calculé comme
$L$ = [poids du récipient (g)/(volume du récipient (ml))$^{0,77}$]*0,44, inférieur à 1, de préférence inférieur à 0,90, de manière davantage préférée inférieur à 0,75 et de manière préférée entre toutes inférieur à 0,60.

2. Récipient en verre selon la revendication 1, dans lequel ledit revêtement est **caractérisé par** un rapport T, T étant égal à

$$\textit{écart-type échantillon de l'épaisseur du revêtement} \div \textit{épaisseur du revêtement,}$$

mesuré le long d'une ligne théorique s'étendant dans un plan perpendiculaire à l'axe longitudinal du récipient en verre sur une circonférence de la surface extérieure, et présentant une valeur de 0,062 au maximum, de préférence une valeur de 0,050 au maximum, de manière préférée entre toutes une valeur de 0,044 au maximum.

3. Récipient en verre selon la revendication 1 ou 2, ledit récipient présentant une résistance à la pression interne d'au moins 12 bars, de préférence d'au moins 20 bars.

4. Récipient en verre selon l'une quelconque des revendications précédentes, présentant une résistance à l'impact de 70 cm/s, de préférence de 120 cm/s, de manière préférée entre toutes de 210 cm/s.

5. Récipient en verre selon l'une quelconque des revendications précédentes, présentant un volume interne compris entre 10 cl et 1,2 1.

6. Récipient en verre selon l'une quelconque des revendications précédentes, ledit revêtement de polymère acrylate-uréthane présentant une épaisseur moyenne comprise entre 20 et 40 $\mu$m.

7. Récipient en verre selon l'une quelconque des revendications précédentes, ledit revêtement de polymère acrylate-uréthane définissant une zone de contact extérieure exposée du récipient ne présentant pas de revêtement ultérieur sur ledit revêtement de polymère acrylate-uréthane.

8. Récipient en verre selon l'une quelconque des revendications précédentes, ledit revêtement de polymère acrylate-uréthane étant appliqué sur un revêtement d'extrémité chaude.

9. Récipient en verre selon l'une quelconque des revendications précédentes, ledit récipient étant une bouteille de boisson, de préférence une bouteille de boisson gazeuse.

10. Récipient en verre selon la revendication 9, ladite bouteille étant une bouteille de bière ou de cidre.

11. Récipient en verre selon l'une quelconque des revendications précédentes, ledit récipient en verre étant une bouteille en verre consignée ou non-consignée.

12. Procédé de revêtement d'un récipient en verre présentant un axe longitudinal, ledit procédé comprenant les étapes consistant à :

   - fournir un récipient en verre, ledit récipient en verre étant facultativement revêtu d'un revêtement d'extrémité chaude ;
   - déposer un polymère d'acrylate-uréthane sur au moins une partie d'une surface extérieure dudit récipient par une technique d'impression numérique (106) ;
   - durcir ledit polymère d'acrylate-uréthane déposé sur le récipient pour obtenir un revêtement (108),
   dans lequel ledit récipient en verre présente un indice de légèreté L, calculé comme
   $L$ = [poids du récipient (g)/(volume du récipient (ml)$^{0,77}$]*0,44, inférieur à 1, de préférence inférieur à 0,90, de manière davantage préférée inférieur à 0,75 et de manière préférée entre toutes, inférieur à 0,60.

13. Procédé selon la revendication 12, dans lequel ledit revêtement est **caractérisé par** un rapport T, T étant égal à

$$\textit{écart-type échantillon de l'épaisseur du revêtement} \div \textit{épaisseur du revêtement,}$$

   - mesuré le long d'une ligne théorique s'étendant dans un plan perpendiculaire à l'axe longitudinal du récipient sur une circonférence de la surface extérieure - qui présente une valeur de 0,062 au maximum, de préférence une valeur de 0,050 au maximum, de manière préférée entre toutes une valeur de 0,044 au maximum.

14. Utilisation d'un récipient en verre selon l'une quelconque des revendications 1 à 10 permettant de contenir une boisson, de préférence une boisson gazeuse.

15. Utilisation du récipient en verre selon la revendication 14, dans laquelle la boisson est une bière ou un cidre.

100

102

blowing a glass bottle

104

cooling said glass bottle to below the Tg of the glass

106

depositing an acrylate urethane polymer on at least a part of an outer surface of said bottle by a digital printing technique

108

curing said acrylate urethane polymer deposited on the bottle to obtain a coating

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013049618 A

**Non-patent literature cited in the description**

- **BETTEMBOURG J-M.** *Protection des verres de vitraux contre les agents atmospheriques. Etude de films de resins synthetiques*